# EUROPÄISCHE PATENTSCHRIFT

(11) **EP 3 307 653 B1**
(45) Veröffentlichungstag und Bekanntmachung des Hinweises auf die Patenterteilung: **14.11.2018**
(21) Anmeldenummer: 16736369.6
(22) Anmeldetag: 13.06.2016
(51) Int. Cl.: B65G 1/02, E04C 3/04, A47B 96/02

(54) **ROSTE, INSBESONDERE FÜR DIE VERWENDUNG ALS FACHBODEN FÜR PLATTENREGALE ODER SCHWERLASTREGALE**
GRATE, IN PARTICULAR FOR USE AS A SHELF FOR PALLET RACKS OR HEAVY DUTY RACKS
GRILLE DESTINÉE EN PARTICULIER À ÊTRE UTILISÉE EN TANT QUE TABLETTE POUR DES RAYONNAGES À PLAQUES OU DES RAYONNAGES POUR CHARGES LOURDES

(30) Priorität: 11.06.2015 DE 102015109306; 11.01.2016 DE 202016100077 U
(43) Veröffentlichungstag der Anmeldung: 18.04.2018
(73) Patentinhaber: Gebrüder Meiser GmbH, 66839 Schmelz (DE)
(72) Erfinder: MEISER, Wolfgang, 66119 Saarbrücken (DE)
(74) Vertreter: Patentanwaltskanzlei Vièl & Wieske PartGmbB
(86) Internationale Anmeldenummer: PCT/DE2016/100268
(87) Internationale Veröffentlichungsnummer: WO 2016/198050

(56) Entgegenhaltungen:
- EP-A1- 0 576 693
- EP-A1- 1 559 346
- EP-A1- 2 062 502
- DE-U1- 8 014 894
- DE-U1- 8 808 144
- DE-U1-202007 013 691
- DE-U1-202009 013 922

## Beschreibung

Die vorliegende Erfindung betrifft Roste, insbesondere für die Verwendung als Fachboden für Plattenregale oder Schwerlastregale, mit zwei Längsseiten und zwischen den Längsseiten angeordneten Querträgern.

Wegen möglicher Brandgefahr in Lagerhallen werden Roste, die in Plattenregalen oder Schwerlastregalen angeordnet sind, für die Lagerung von Gütern verwendet. Diese Roste, wie beispielsweise in der DE 80 14 894 U1 offenbart, weisen an ihren Längsseiten Profile auf, so dass sie auf Trägerbalken bzw. Holmen der Regale aufgenommen werden können. Zwischen den Längsseiten der Roste sind Längs- und Querstege angeordnet, auf denen die Güter gelagert werden. Durch die Ausgestaltung mit Längs- und Querstegen werden zudem Freiflächen gebildet, durch die im Falle eines Brandes Löschmedien (z.B. Löschwasser) von Sprinkleranlagen, die oftmals oberhalb der Roste angeordnet sind, durch die freien Flächen der Roste durchtreten können. Die Längs- und Querstege der Roste sind hierbei derart ausgestaltet, dass eine möglichst hohe Traglast der Roste erreicht wird und dennoch genügend Freiflächen für den Wasserdurchtritt gewährleitet werden können. Dementsprechend sind die Längsseiten und die Längs- und Querstege der vorbekannten Roste aus Stahlwerkstoffen hergestellt, die, um die gewünschte Stabilität und Traglast zu gewähren, nicht als Hohlkörper ausgebildet sind.

Nachteilig bei den oben beschriebenen Rosten ist, dass diese Roste, um hohe Traglasten zu gewähren, selbst ein hohes Eigengewicht aufweisen. Dementsprechend müssen die Plattenregale und Schwerlastregale derart konstruiert werden, dass sie neben den Gütern auch die Roste tragen können. Diese hochbeanspruchten Plattenregale und Schwerlastregale sind relativ teuer in der Anschaffung. Nachteilig ist weiterhin, dass hohe Materialkosten entstehen, um die gewünschte Traglast zu gewährleisten.

Die EP 1 559 346 A1 und die DE 88 08 144 U1 offenbaren deswegen Regalroste, die zwei Längsseiten und zwischen den Längsseiten angeordnete Querträger aufweisen, wobei die Längsseiten im Querschnitt als offenes U-Profil ausgebildet sind. Die offenen Seiten der Querträger sind zur Unterseite des Rostes ausgerichtet. Jeder dieser Querträger weist an jedem Ende

Aussparungen auf, die mit den Längsseiten über Stützleisten lösbar koppelbar sind. Die DE 88 08 144 U1 offenbart einen Rost nach dem Oberbegriff des Anspruchs 1 bzw. Anspruchs 2. Weiterhin werden von der Firma Gebr. Meiser GmbH U-Profil Regalroste angeboten, die zwei Längsseiten und zwischen den Längsseiten angeordneten Querträgern aufweisen, wobei die Längsseiten im Querschnitt als Profil ausgebildet sind, wobei das Profil wenigstens einen ersten Schenkel und einen im Wesentlichen rechtwinklig zum ersten Schenkel angeordneten zweiten Schenkel umfasst, wobei wenigstens zwei der Querträger im Querschnitt ein offenes Profil aufweisen, dessen offene Seite zur Unterseite des Rostes ausgerichtet ist, wobei jeder dieser Querträger an jedem Ende wenigstens eine Stanzung aufweist, wobei in jeder Stanzung der erste Schenkel des Profils angeordnet ist über einen stoffschlüssigen Fügeprozess, insbesondere ein Widerstandsschweißverfahren, fest mit diesem verbunden sind.

Der eingesetzte Schweißprozess bedarf jedoch einer stetigen Überwachung und Regulierung der Schweißparameter im Fügeprozess, da sich jede Veränderung der Beschaffenheit der Ausgangsmaterialien als Störgröße im Prozess und in der Qualität des Fertigungsergebnisses widerspiegelt. Insbesondere muss die Überwachung und Regulierung der Schweißparameter im Fügeprozess dann erfolgen, wenn sehr dünne, aber auch unterschiedlich dicke Materialstärken, sowie vorbeschichtete Werkstoffe miteinander stoffschlüssig gefügt werden müssen. Würde eine stetige Überwachung und Regulierung der Schweißparameter im Fügeprozess nicht stattfinden, könnte die Haltbarkeit der Schweißnaht im Gebrauch beeinträchtigt werden, was zum Versagen der Schweißnaht und damit zur Destabilisierung des Regalrostes führen könnte.

Der Erfindung liegt daher die Aufgabe zugrunde, einen Rost bereitzustellen, der leichter ist und günstiger bzw. weniger überwachungsintensiv in der Herstellung ist als der vorbekannte Stand der Technik, ohne die Baustabilität und Tragfähigkeit zu beeinträchtigen.

Die Aufgabe der Erfindung wird zum einen durch einen Rost, insbesondere für die Verwendung als Fachboden für Plattenregale oder Schwerlastregale, mit zwei Längsseiten und zwischen den Längsseiten angeordneten Querträgern, wobei die Längsseiten im Querschnitt als Profil ausgebildet sind, wobei das Profil wenigstens einen ersten Schenkel und einen im Wesentlichen rechtwinklig zum ersten Schenkel angeordneten zweiten Schenkel umfasst, wobei wenigstens zwei der Querträger im Querschnitt ein offenes - insbesondere U- oder V-förmiges - Profil aufweisen, dessen offene Seite zur Unterseite des Rostes ausgerichtet ist, wobei jeder dieser Querträger an jedem Ende wenigstens zwei Stanzungen aufweist, wobei in jeder Stanzung der erste Schenkel des Profils angeordnet ist und über ein Verbindungsverfahren fest mit diesem verbunden ist, dadurch gelöst, dass der erste Schenkel des Profils in jeder Stanzung eingesteckt oder eingepresst ist, wodurch eine vertikale Fixierung des Profils mit dem Querträger erreicht wird, und dass der erste Schenkel des Profils wenigstens eine Verformung aufweist, wobei die wenigstens eine Verformung eine Prägung ist, wodurch eine horizontale Fixierung der Steck- oder Pressverbindung des Querträgers mit dem Profil erreicht wird.

Die Aufgabe der Erfindung wird ebenfalls durch einen Rost, insbesondere für die Verwendung als Fachboden für Plattenregale oder Schwerlastregale, mit zwei Längsseiten und zwischen den Längsseiten angeordneten Querträgern, wobei die Längsseiten im Querschnitt als Profil ausgebildet sind, wobei das Profil wenigstens einen ersten Schenkel und einen im Wesentlichen rechtwinklig zum ersten Schenkel angeordneten zweiten Schenkel umfasst, wobei wenigstens zwei der Querträger im Querschnitt ein L- förmiges Profil aufweisen, wobei wenigstens eine der offenen Seite zur Unterseite des Rostes ausgerichtet ist, wobei jeder dieser Querträger an jedem Ende eine Stanzung aufweist, in welcher der erste Schenkel des Profils angeordnet ist und über ein Verbindungsverfahren fest mit diesem verbunden ist, dadurch gelöst, dass der erste Schenkel des Profils in der Stanzung eingesteckt oder eingepresst ist, wodurch eine vertikale Fixierung des Profils mit dem Querträger erreicht wird, und dass der erste Schenkel des Profils wenigstens eine Verformung aufweist, wobei die wenigstens eine Verformung eine Prägung ist, wodurch eine horizontale Fixierung der Steck- oder Pressverbindung des Querträgers mit dem Profil erreicht wird.

Für beide Lösungen wird durch die offene Ausgestaltung von wenigstens zwei Querträgern eine Gewichtsreduktion des Rostes insgesamt erreicht, da diese Querträger, die im Querschnitt ein offenes - insbesondere U-, L- oder V-förmiges - Profil aufweisen, ein hohes Widerstandsmoment aufweisen.

Da mehrere dieser Roste als Fachböden in Plattenregalen oder Schwerlastregalen angeordnet werden, kann durch eine Gewichtsreduktion der Roste eine Kostenreduktion in der Regalkonstruktion erreicht werden, da diese, bei gleichbleibender Stabilität, weniger Last tragen müssen, wodurch die Materialkosten (zum Erreichen dieser Stabilität) für die Regale gesenkt werden können.

Da der Schenkel des Profils in der Stanzung des Querträgers eingesteckt oder eingepresst ist, wird eine vertikale Fixierung des Profils mit dem Querträger erreicht. Für beide Lösungen ist vorgesehen, dass eine horizontale Fixierung, d.h. eine Sicherung gegen Verschieben der Bauteile (Profil und Querträger) gegeneinander, durch ein weiteres Verbindungsverfahren, nämlich ein form- und/oder kraftschlüssiges Verbindungsverfahren, erfolgt ist. Die horizontale Fixierung kann hierbei zeitlich vor oder nach dem Zusammenfügen der Bauteile erfolgt sein.

Um ein Verschieben der Bauteile (Profil und Querträger) gegeneinander zu verhindern, ist hierbei vorgesehen, dass der erste Schenkel des Profils wenigstens eine Verformung aufweist. Hierbei kann vorteilhaft vorgesehen sein, dass die wenigstens eine Verformung nach dem Verbinden mit den Querträgern eingebracht ist.

Vorteilhafterweise ist die wenigstens eine Verformung in der Nähe bzw. direkt neben der Steck- bzw. Pressverbindung des Querträgers mit dem Profil angeordnet. Es ist ebenfalls vorteilhaft vorgesehen, dass wenigstens zwei Verformungen in dem Profil beidseitig jeweils in der Nähe bzw. direkt neben der Steck- bzw. Pressverbindung angeordnet sind, so dass die Steck- bzw. Pressverbindung des Querträgers mit dem Profil beidseitig horizontal fixiert ist.

Für beide Lösungen ist vorgesehen, dass die wenigstens eine Verformung eine Prägung ist. Eine Prägung ist hierbei eine mit Druck, Tiefziehen oder Prägewerkzeug in den Schenkel eingebrachte Verformung.

Es ist zu der Erfindung gehörig, dass das Profil als Z-Profil oder als L-Profil ausgebildet ist, wobei das Z-Profil einen zum ersten Schenkel im Wesentlichen parallel angeordneten zweiten Schenkel und ein den ersten und den zweiten Schenkel verbindendes Verbindungsteil umfasst und das L-Profil einen ersten Schenkel und einen im Wesentlichen rechtwinklig zum ersten Schenkel angeordneten zweiten Schenkel umfasst. Die als L-Profil oder als Z-Profil ausgestalteten Längsseiten des Rostes sind in den an den Enden des Querträgers eingebrachten Stanzungen angeordnet und über ein Verbindungsverfahren, insbesondere ein form- und/oder kraftschlüssiges Verbindungsverfahren, fest verbunden.

Um das Verschieben der Bauteile (Profil und U- oder V-förmige Querträger) gegeneinander weiterhin zu verhindern, ist weiterhin erfindungsgemäß vorgesehen, dass der erste Schenkel des Profils wenigstens eine weitere Verformung aufweist, welche vor dem Verbinden mit den Querträgern eingebracht ist.

Der Querträger kann dadurch auf die wenigstens eine bereits vorhandene weitere Verformung des Profils aufgesteckt bzw. aufgeschoben werden und danach durch wenigstens eine Verformung gegen ein Verschieben gesichert werden.

Bei allen vorgenannten Verformungen ist vorteilhaft vorgesehen, dass die weitere Verformung eine Prägung ist. Eine Prägung ist hierbei eine mit Druck, Tiefziehen oder Prägewerkzeug in den Schenkel eingebrachte Verformung.

Es ist vorteilhaft, dass der erste Schenkel des Profils im an den zweiten Schenkel angrenzenden Bereich mindestens eine zum Querträger hin gerichtete Lasche aufweist. Hierdurch wird im Kontaktbereich zwischen dem Profil und dem Querträger ein zweiter Lagerpunkt geschaffen, der es ermöglicht, die in der Ebene des Verbindungsschenkels eingeleiteten Drehmomente statisch aufzunehmen, was insbesondere bei langen Querträgern in Anbetracht der auf den Rost wirkenden Drehmomente von Vorteil ist. Dieser zweite Lagerpunkt ist vorteilhafterweise im größtmöglichen Abstand zum ersten Lagerpunkt, der durch die Verformung in Nähe bzw. direkt neben der Steck- bzw. Pressverbindung des Querträgers mit dem Profil gebildet wird. Die Lasche(n) können durch den unmittelbaren Kontakt zum Querträger auf dessen innerer Seite die eingeleiteten Drehmomente aufnehmen und zur Gesamtstabilität des Rostes beitragen.

Es wird in diesem Zusammenhang bevorzugt, dass mindestens zwei zum Querträger hin gerichtete Laschen vorgesehen sind.

Unter fertigungstechnischen Aspekten ist es sinnvoll, dass die Laschen und die Stanzungen des Querträgers jeweils gleich gerichtet sind. Sind die in den Querträger eingebrachten Stanzungen in Bezug zur späteren Einbaulage des Rostes nach oben hin gerichtet eingebracht, kann bei einer um 180° zur Einbaulage des Rostes gewendeten Anordnung aller Fügeelemente im Fügeprozess ein abwärts arbeitendes Präge- und Stanzwerkzeug alle Materialverformungen zeitgleich erzeugen.

Auf der Oberseite des Rostes bilden die im Querschnitt U-, L- oder V-förmigen Querträger, wobei die offene Seite dieser Profile zur Unterseite des Rostes zeigen (bzw. bei den L-förmigen Querträgern vorzugsweise die kürzere der offenen Seiten zur Unterseite des Rostes zeigen), sogenannte "Rutschbahnen", über die die Güter, die auf Paletten oder in Kartons angeordnet sind, leicht verschoben werden können. Aufgrund der hohen Tragkraft der U-, L- oder V-förmigen Profile der Querträger und des Verzichts auf Füllstäbe bzw. Längsstege kann der Rost hohe Lasten bei geringem Eigengewicht tragen.

Dementsprechend sieht eine Ausgestaltung der Erfindung vor, dass alle Querträger im Querschnitt ein offenes Profil aufweisen, deren offene Seite zur Unterseite des Rostes ausgerichtet ist.

Es ist zu der Erfindung gehörig, dass der Rost aus Stahl, Edelstahl oder Aluminium besteht.

Hierbei kann vorteilhaft vorgesehen sein, dass der Rost aus Stahl besteht, wobei der Stahl ein vorverzinkter Stahl ist.

Eine weitere Ausgestaltung der Erfindung sieht vorteilhaft vor, dass die Oberflächen der Längsseiten und der Querträger mit einem Beschichtungsmaterial beschichtet sind, wobei das Beschichtungsmaterial die Oberflächen vor Korrosion schützt und/oder feuerabweisend wirkt.

Es ist zu der Erfindung gehörig, dass das Verhältnis der Traglast des Rostes zu dem Eigengewicht des Rostes im Bereich von 10 bis 200 liegt.

Damit besitzt der erfindungsgemäße Rost eine Tragkraft, die das 10-fache bis 200-fache des Eigengewichts aufweist.

In den Tabellen 1 und 2 sind Belastungstabellen für einen erfindungsgemäßen Rost dargestellt, wobei der Rost Querträger hat, die im Querschnitt ein offenes U- förmiges Profil aufweisen, dessen offene Seite zur Unterseite des Rostes ausgerichtet ist. In Tabelle 1 ist eine Belastungstabelle für eine Rostbreite von 890 mm gezeigt, in Tabelle 2 ist eine Belastungstabelle für eine Rostbreite von 1340 mm gezeigt.

**Tabelle 1**

| **Rost-Länge** | **300 kg/m²** | | **500 kg/m²** | | **800 kg/m²** | | **1000 kg/m²** | |
|---|---|---|---|---|---|---|---|---|
| | U-Profil | Teilung | U-Profil | Teilung | U-Profi l | Teilung | U-Profil | Teilung |
| 944mm | 20x29x0,7 | 124mm | 20x31x0,8 | 124mm | 20x37x0,8 | 124mm | 20x37x1,0 | 124mm |
| 995mm | 20x29x0,7 | 124mm | 20x33x0,8 | 124mm | 20x39x0,8 | 124mm | 20x40x1,0 | 124mm |
| 1.200mm | 20x33x0,8 | 124mm | 20x37x1,0 | 124mm | 20x39x1,0 | 87mm | 20x40x1,0 | 79mm |

**Tabelle 2**

| **RostLänge** | **300 kg/m²** | | **500 kg/m²** | | **800 kg/m²** | | **1000 kg/m²** | |
|---|---|---|---|---|---|---|---|---|
| | U-Profil | Teilung | U-Profil | Teilung | U-Profil | Teilung | U-Profil | Teilung |
| 944mm | 20x29x0,7 | 120mm | 20x31x0,8 | 120mm | 20x37x0,8 | 120mm | 20x37x1,0 | 120mm |
| 995mm | 20x29x0,7 | 120mm | 20x33x0,8 | 120mm | 20x39x0,8 | 120mm | 20x40x1,0 | 120mm |
| 1.200mm | 20x33x0,8 | 120mm | 20x37x1,0 | 120mm | 20x39x1,0 | 88mm | 20x40x1,0 | 77mm |

Für beide Belastungstabellen gilt, dass eine maximal zulässige Verformung (Durchbiegung) von L/200 (Länge des Rostes [mm] geteilt durch 200) berücksichtigt wurde. Wie in Tabelle 3 dargestellt, liegt das Verhältnis der Traglast des Rostes zu dem Eigengewicht des Rostes im Bereich von 10 bis 200 (das 10- bis 200-fache der Traglast des Rostes im Verhältnis zu seinem Eigengewicht). Die Einheit des Faktors ist [(kg/m²)/(kg/Rost)], wobei (kg/m²) eine verteilte Nutzlast beschreibt. Beispielsweise beträgt der Faktor für die Ausführungen bei 1000 kg Belastung für folgende Abmessungen:

**Tabelle 3**

| **Rostlänge [mm] x Rostbreite [mm]** | **Faktor [(kg/m²)/(kg/Rost)]** |
|---|---|
| 944 mm x 890 mm | 156 |
| 944 mm x1340 mm | 98 |
| 995 mm x 890 mm | 144 |
| 995 mm x 1340 mm | 108 |

In den Tabellen 4 und 5 sind Belastungstabellen für einen erfindungsgemäßen Rost dargestellt, wobei der Rost Querträger hat, die im Querschnitt ein offenes L- förmiges Profil aufweisen, dessen kürzere offene Seite zur Unterseite des Rostes ausgerichtet ist. In Tabelle 4 ist eine Belastungstabelle für eine Rostbreite von 890 mm gezeigt, in Tabelle 5 ist eine Belastungstabelle für eine Rostbreite von 1340 mm gezeigt. Für beide Belastungstabellen gilt, dass eine maximal zulässige Verformung von L/200 (Länge des Rostes [mm] / 200) berücksichtigt wurde.

**Tabelle 4**

| **RostLänge** | **300 kg/m²** | | **500 kg/m²** | | **800 kg/m²** | | **1000 kg/m²** | |
|---|---|---|---|---|---|---|---|---|
| | L-Profil | Teilung | L-Profil | Teilung | L-Profil | Teilung | L-Profil | Teilung |
| 944mm | 20x27x0,8 | 87mm | 20x33x0,8 | 87mm | 20x36x1,0 | 87mm | 20x40x1,0 | 87mm |
| 995mm | 20x29x0,8 | 87mm | 20x35x0,8 | 87mm | 20x39x1,0 | 87mm | 20x42x1,0 | 87mm |
| 1.200mm | 20x33x0,8 | 87mm | 20x37x0,8 | 58mm | 20x40x1,0 | 58mm | 20x44x1,0 | 58mm |

**Tabelle 5**

| **RostLänge** | **300 kg/m²** | | **500 kg/m²** | | **800 kg/m²** | | **1000 kg/m²** | |
|---|---|---|---|---|---|---|---|---|
| | L-Profil | Teilung | L-Profil | Teilung | L-Profil | Teilung | L-Profil | Teilung |
| 944mm | 20x27x0,8 | 88mm | 20x33x0,8 | 88mm | 20x36x1,0 | 88mm | 20x39x1,0 | 88mm |
| 995mm | 20x29x0,8 | 88mm | 20x35x0,8 | 88mm | 20x39x1,0 | 88mm | 20x36x1,0 | 60mm |
| 1.200mm | 20x36x0,8 | 88mm | 23x40x1,0 | 88mm | 20x40x1,0 | 60mm | 20x44x1,0 | 60mm |

Auch die Roste mit Querträgern, die im Querschnitt ein offenes L- förmiges Profil aufweisen, zeigten, dass das Verhältnis der Traglast des Rostes zu dem Eigengewicht des Rostes im Bereich von 10 bis 200 (das 10- bis 200-fache der Traglast des Rostes im Verhältnis zu seinem Eigengewicht) liegt.

Der Begriff "Teilung" in den Tabellen 1 und 2 sowie 4 und 5 definiert den Abstand von der Querträgermitte eines Querträgers zur Querträgermitte eines benachbarten Querträgers.

Weiterhin ist in vorteilhafter Weise vorgesehen, dass wenigstens 70 % der von dem Rost abgedeckten Fläche als freie Projektionsfläche ausgestaltet ist.

Diese Ausgestaltung ist insbesondere vorteilhaft, um im Falle eines Brandes den Abschattungseffekt des Rostes (der aus Querträgern und Längsseiten besteht) so gering wie möglich zu gestalten, so dass Löschmedien von Sprinkleranlagen durch die freien Projektionsflächen (Durchtrittsflächen) des Rostes durchtreten können.

Eine vorteilhafte Ausgestaltung der Erfindung sieht vor, dass die wenigstens eine Stanzung am jeweiligen Ende des Querträgers eine Einlaufkontur mit wenigstens einer Schikane aufweist, wodurch ein zentriertes Einführen und ein kraft- und/oder formschlüssiges Verbinden des ersten Schenkels des Profils mit dem Querträger ermöglicht wird.

Bei dieser Ausgestaltung der Erfindung ist es vorteilhaft, dass die wenigstens eine Stanzung am jeweiligen Ende des Querträgers keilförmig ausgebildet ist.

Es ist ebenso zu der Erfindung gehörig, dass der erste Schenkel des Profils eine Sicke und/oder Schikane aufweist.

Durch diese Ausgestaltung wird weiterhin ein kraftschlüssiges Verbinden des ersten Schenkels des Profils mit dem Querträger ermöglicht. Ebenso ist vorstellbar, dass die Sicke und/oder Schikane des ersten Schenkels des Profils mit der Einlaufkontur der Stanzung des Querträgers korrespondiert, wodurch ein weiteres kraft- und/oder formschlüssiges Verbinden des ersten Schenkels des Profils mit dem Querträger ermöglicht wird.

Weiterhin ist erfindungsgemäß vorgesehen, dass das den ersten und den zweiten Schenkel verbindende Verbindungsteil des Z-Profils oder der im Wesentlichen rechtwinklig zum ersten Schenkel angeordnete zweite Schenkel des L-Profils eine Sicke aufweist.

Diese Sicke ist an dem ersten und den zweiten Schenkel verbindenden Verbindungsteil des Z-Profils oder an dem im Wesentlichen rechtwinklig zum ersten Schenkel angeordneten zweiten Schenkel des L-Profils angeordnet, um Material für das Schweißverfahren bereitzustellen, wobei das Verfahren vorzugsweise ein Widerstandsschweißverfahren ist, wodurch eine definierte Schmelzlinie (Anschmelzpunkte) entlang des Profils für das Verbinden bereitgestellt wird.

Nachfolgend werden Ausführungsbeispiele der Erfindung anhand von Zeichnungen näher, aber nicht darauf beschränkt, erläutert. Es zeigen
- Fig. 1: den erfindungsgemäßen Rost in Draufsicht, wobei die Längsseiten im Querschnitt als Z-Profil ausgebildet sind,
- Fig. 2: den erfindungsgemäßen Rost in perspektivischer Ansicht, wobei die Längsseiten im Querschnitt als L-Profil ausgebildet sind,
- Fig. 3: ein vergrößerten Ausschnitt der perspektivischen Ansicht aus Fig. 2, wobei ein L-Profil in den Stanzungen eines Querträgers angeordnet ist,
- Fig. 4: einen U-förmigen Querträger des erfindungsgemäßen Rostes mit Stanzungen an dem jeweiligen Ende in perspektivischer Ansicht,
- Fig. 5: einen vergrößerten Ausschnitt des U-förmigen Querträgers aus Fig. 4 mit einer keilförmigen Stanzung an dem vergrößerten Ende in perspektivischer Ansicht,
- Fig. 6: einen vergrößerten Ausschnitt des U-förmigen Querträgers aus Fig. 4 mit einer keilförmigen Stanzung an dem vergrößerten Ende in Seitenansicht,
- Fig. 7: eine Längsseite des erfindungsgemäßen Rostes, wobei die Längsseite im Querschnitt als L-Profil ausgebildet ist und Verformungen aufweist, in perspektivischer Ansicht,
- Fig. 8: einen vergrößerten Ausschnitt der Längsseite aus Fig. 7 in perspektivischer Ansicht, wobei die Längsseite im Querschnitt als L-Profil ausgebildet ist und Verformungen aufweist,
- Fig. 9: ein Ausschnitt des erfindungsgemäßen Rostes, wobei ein Z-Profil dargestellt ist, welches noch nicht in der Stanzung eines Querträgers angeordnet ist,
- Fig. 10: eine Querschnittdarstellung des Querträgers, wobei der Querträger im Querschnitt ein U-Profil mit zwei Stanzungen aufweist,
- Fig. 11 a und Fig. 11b: ein weiteres Ausführungsbeispiel eines erfindungsgemäßen Rostes in Seitenansicht und Detailansicht,
- Fig. 12a und Fig. 12b: eine der Längsseiten des Rostes des weiteren Ausführungsbeispiels nach dem Fügeprozess in perspektivischer Ansicht und Detailansicht.

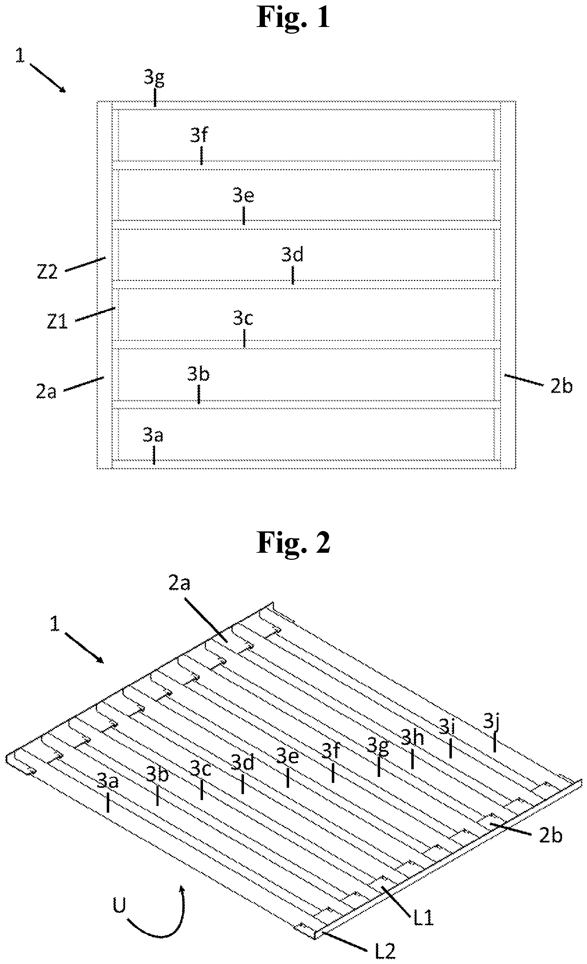

In Fig. 1 ist der erfindungsgemäße Rost (1) mit zwei Längsseiten (2a, 2b) und zwischen den Längsseiten (2a, 2b) angeordneten Querträgern (3a-3g) in Draufsicht dargestellt. Die Längsseiten (2a, 2b) sind im Querschnitt als Z-Profil ausgebildet sind, wobei das Z-Profil einen ersten Schenkel (Z1), einen zum ersten Schenkel im Wesentlichen parallel angeordneten zweiten Schenkel (Z2) und ein den ersten und den zweiten Schenkel verbindendes Verbindungsteil umfasst. Die Querträger (3a- 3g) weisen im Querschnitt ein offenes - hier U- oder L-förmiges - Profil auf, dessen zumindest eine offene Seite zur Unterseite des Rostes (1) ausgerichtet ist.

In Fig. 2 ist der erfindungsgemäße Rost (1) mit zwei Längsseiten (2a, 2b) und zwischen den Längsseiten (2a, 2b) angeordneten Querträgern (3a-3j) in perspektivischer Ansicht dargestellt. Die Längsseiten (2a, 2b) sind im Querschnitt als L-Profil ausgebildet, wobei das L-Profil einen ersten Schenkel (L1) und einen im Wesentlichen rechtwinklig zum ersten Schenkel (L1) angeordneten zweiten Schenkel (L2) umfasst. Die Querträger (3a- 3j) weisen im Querschnitt ein offenes - hier U-förmiges - Profil auf, dessen offene Seite zur Unterseite (U) des Rostes (1) ausgerichtet ist.

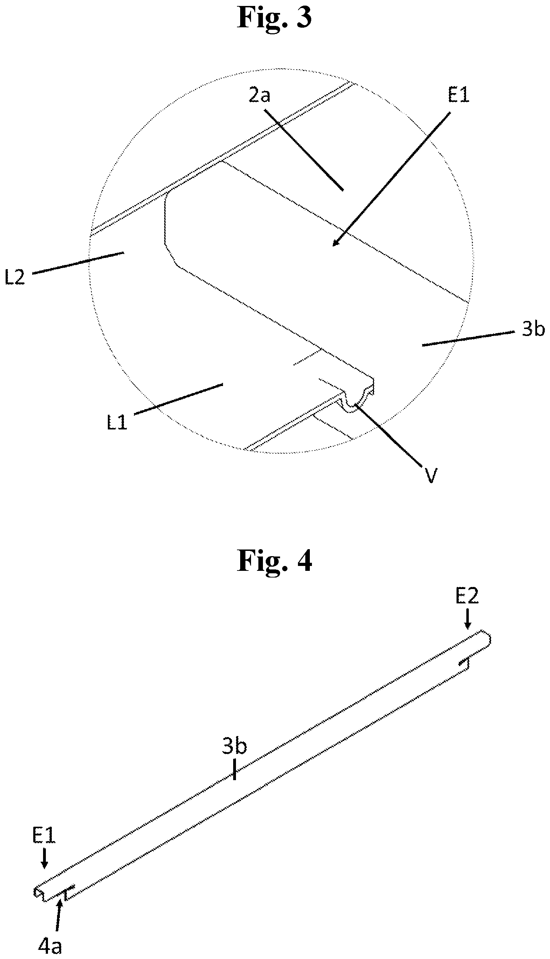

In Fig. 3 ist die Verbindung eines Querträgers (3b) mit einer Längsseite (2a), die im Querschnitt als L-Profil ausgebildet ist, in perspektivischer Ansicht vergrößert dargestellt. Wie dargestellt, ist der erste Schenkel (L1) des L-Profils an einem Ende (E1) des Querträgers in dessen Stanzungen eingesteckt bzw. eingepresst. Da der Querträger (3b) im Querschnitt U-förmig ausgestaltet ist, wobei die offene Seite des U nach unten zeigt, weist der Querträger an jedem Ende zwei Stanzungen auf. Die Stanzungen weisen vorzugsweise eine Schikane auf und/oder sind keilförmig ausgebildet. Durch das Einstecken oder Einpressen des ersten Schenkels (L1) des L-Profils in die Stanzungen des Querträgers (3b) wird erreicht, dass eine vertikale Fixierung der Bauteile (Querträger und Längsseite) gegeneinander erfolgt. Durch das nachträgliche Einbringen von Verformungen (V), beispielsweise jeweils rechts und links vom Querträger, in den ersten Schenkel (L1) des Profils wird zum einen ein horizontales Verschieben der Bauteile gegeneinander verhindert und weiterhin erreicht, dass durch das nachträgliche Verformen des ersten Schenkels (L1) der erste Schenkel (L1) im Bereich der Stanzung vertikal in der Stanzung verformt bzw. verkeilt wird. Letzteres verhindert ein Herausziehen des ersten Schenkels (L1) aus den Stanzungen des Querträgers.

In Fig. 4 ist ein im Querschnitt U-förmiger Querträger, der am jedem Ende (E1, E2) wenigstens zwei Stanzungen aufweist, in perspektivischer Ansicht dargestellt. Es ist vorgesehen, dass wenigstens eine der Stanzungen (4a) an dem jeweiligen Ende (E1, E2) keilförmig ausgebildet ist.

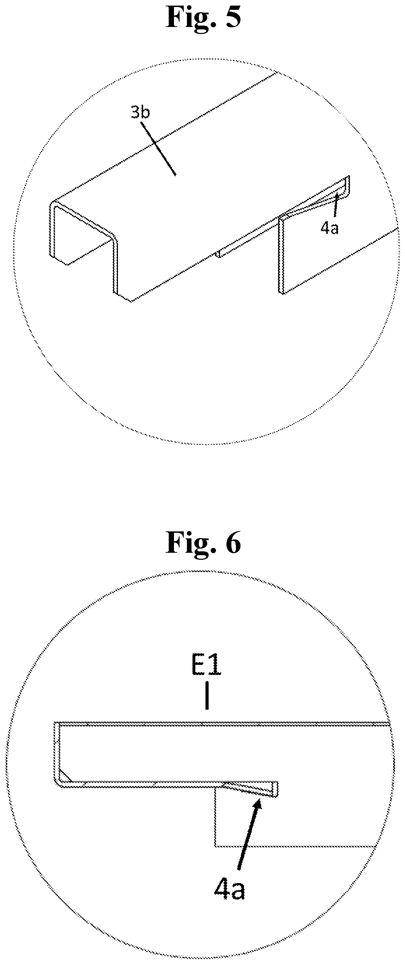

Fig. 5 zeigt einen vergrößerten Ausschnitt des U-förmigen Querträgers aus Fig. 4 mit einer keilförmigen Stanzung (4a) an dem vergrößerten Ende (E1) in perspektivischer Ansicht.

Fig. 6 zeigt einen vergrößerten Ausschnitt des U-förmigen Querträgers aus Fig. 4 mit einer keilförmigen Stanzung (4a) an dem vergrößerten Ende (E1) in Seitenansicht.

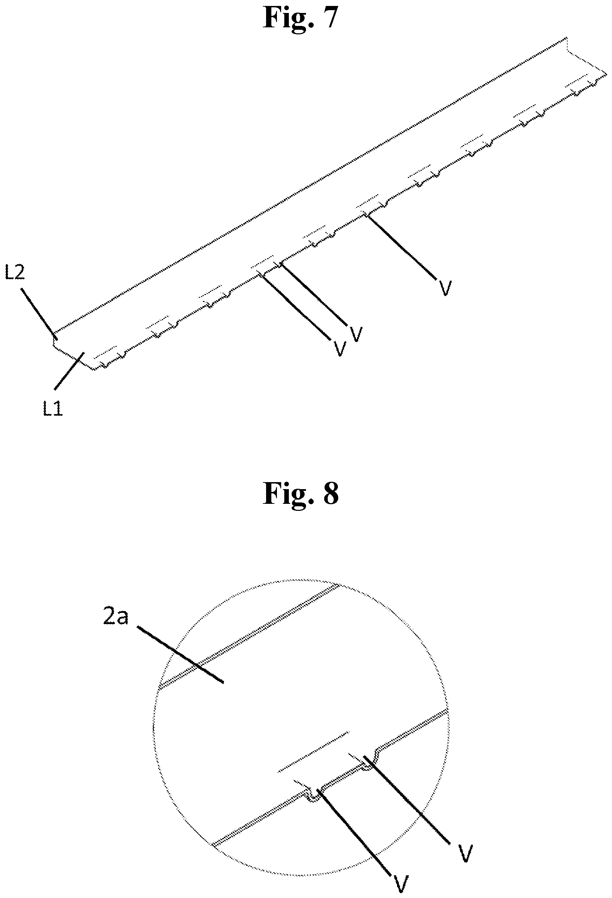

In Fig. 7 ist eine als L-Profil (L1, L2) ausgebildete Längsseite mit Verformungen (V) in perspektivischer Ansicht dargestellt. Die Verformungen (V) können sowohl (zeitlich) vor als auch nach dem Verbinden mit dem Querträger in die Längsseite eingebracht sein.

Fig. 8 zeigt einen vergrößerten Ausschnitt der als L-Profil ausgebildeten Längsseite (2a) mit Verformungen (V) aus Fig. 7 in perspektivischer Ansicht.

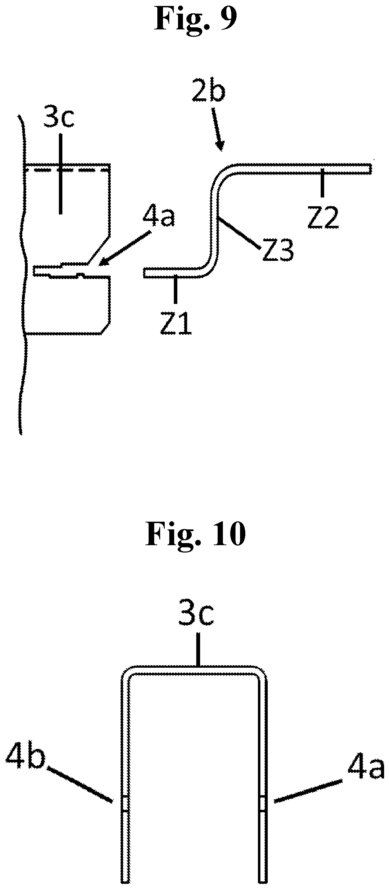

In Fig. 9 ist eine Verbindung des Rostes in 2D-Explosionsansicht dargestellt. Wie gezeigt, sind die Längsseiten (2b) im Querschnitt als Z-Profil (Z1-Z3) ausgebildet, wobei das Z-Profil (Z1-Z3) einen ersten Schenkel (Z1), einen zum ersten Schenkel (Z1) im Wesentlichen parallel angeordneten zweiten Schenkel (Z2) und ein den ersten und den zweiten Schenkel verbindendes Verbindungsteil (Z3) umfasst. An dem Ende des Querträgers (3c) ist eine Stanzung (4a) dargestellt, in der der erste Schenkel (Z1) des Z-Profils (Z1-Z3) angeordnet wird. Die Stanzung hat, wie dargestellt, eine Einlaufkontur mit wenigstens einer Schikane, wodurch ein zentriertes Einführen und ein kraft- und/oder formschlüssiges Verbinden des ersten Schenkels (Z1) des Z-Profils (Z1-Z3) mit dem Querträger ermöglicht wird.

In Fig. 10 ist ein nach unten offenes U-Profil an einem Ende des einen beispielshaften Querträgers (3c) dargestellt. Wie gezeigt, weist der Querträger (3c) an einem Ende zwei Stanzungen (4a, 4b) auf, wobei in jeder Stanzung (4a, 4b) der erste Schenkel eines Z-Profils angeordnet sein kann und über ein Verbindungsverfahren fest mit diesem verbunden werden kann.

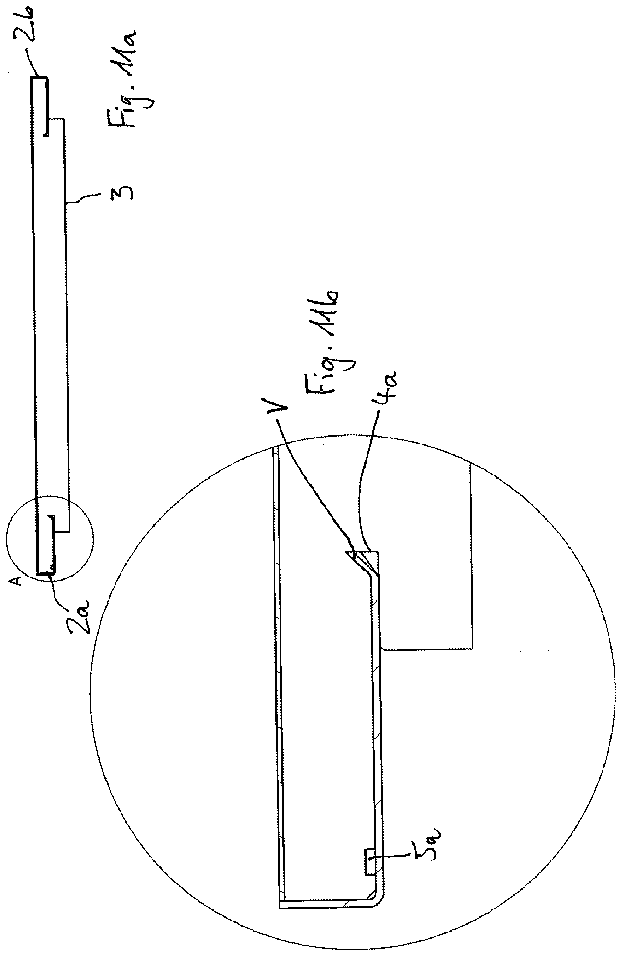

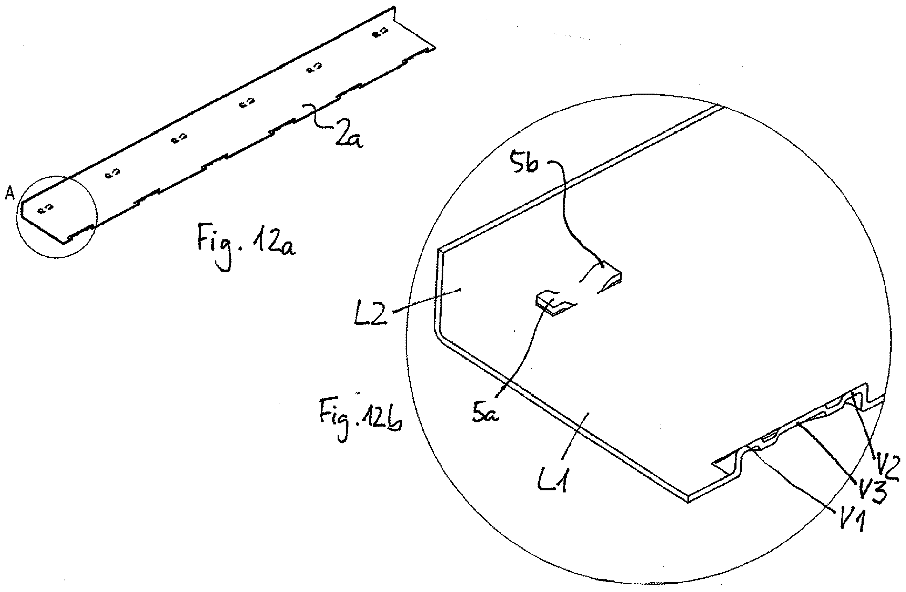

Fig. 11a und 11b zeigen ein weiteres Ausführungsbeispiel eines erfindungsgemäßen Rostes (1). Insbesondere bei langen Querträgern besteht die Notwendigkeit, neben der Fixierung gegen horizontales und vertikales Verschieben auch einen dritten Freiheitsgrad an der Verbindungsstelle fügetechnisch festzulegen. Weisen die Querträger nämlich eine größere Längenausdehnung auf, so entstehen auch unter geringen Kraftaufwendungen derart große Drehmomente, dass ein paralleles Verschieben der L-Profile (L1, L2) der Längsseiten (2a, 2b) eintritt und dadurch der Rost (1) aus seiner im Idealfall rechteckigen Grundform in die Gestalt eines Parallelogramms überführt wird. Um dem vorzubeugen, wird im Kontaktbereich zwischen dem L-Profil (L1) und dem Querträger ein weiterer Lagerpunkt vorgesehen, der in der Lage ist, die in der Ebene des Verbindungsschenkels eingeleiteten Drehmomente statisch aufzunehmen. Eine konkrete fertigungstechnische Umsetzung erfolgt, wie in den Fig. 11a, 11b, 12a und 12b gezeigt, indem die L-Profile (L1) der Längsseiten (2a, 2b) eine Einstanzung eingebracht wird, welche möglichst weit von dem ersten Lagerpunkt entfernt ist, welcher durch die Verformung(en) (V) direkt neben der Pressverbindung gebildet wird. Aus dieser Einstanzung werden im nachfolgenden Prozess zwei Laschen (5a, 5b) ausgebildet, die durch den unmittelbaren Kontakt zum Querträger auf dessen innerer Seite die eingeleiteten Drehmomente aufnehmen können und zur Gesamtstabilität des Rostes (1) beitragen.

Um sowohl die Verformung(en) (V) neben der Pressverbindung als auch die Einstanzung zur Bildung der Laschen (5a, 5b) in einem Fügevorgang durchführen zu können, ist die im Querträger eingebrachte Stanzung (4a, 4b) in Bezug zur späteren Einbaulage des Rostes (1) nicht nach unten (wie in Fig. 5 und 6 gezeigt), sondern nach oben gerichtet eingebracht. Bei einer um 180° zur Einbaulage des Rostes (1) gewendeten Anordnung aller Fügeelemente im Fügeprozess kann nun ein abwärts arbeitendes Präge- und Stanzwerkzeug alle Materialverformungen zeitgleich erzeugen. Als fügeverbessernde Maßnahme wird hier zusätzlich zur Einbringung von Verformungen (V1, V2) beidseits des Querträgers auch zwischen dessen Stegen eine dritte Verformung (V3) eingebracht.

Hinsichtlich weiterer, in den Figuren nicht gezeigter Merkmale wird auf den allgemeinen Teil der Beschreibung verwiesen.

Abschließend sei darauf hingewiesen, dass die erfindungsgemäße Lehre nicht auf die voranstehend erörterten Ausführungsbeispiele beschränkt ist. Vielmehr sind die unterschiedlichsten Ausbildungen der Längsseiten und der Querträger, verschiedene Anzahl, verschiedene Profile sowie Formgebungen der Querträger möglich.

## Patentansprüche

1. Rost (1), insbesondere für die Verwendung als Fachboden für Plattenregale oder Schwerlastregale, mit zwei Längsseiten (2a, 2b) und zwischen den Längsseiten (2a, 2b) angeordneten Querträgern (3a, 3b, 3c, 3d, 3e, 3f, 3g, 3h, 3i, 3j), wobei die Längsseiten (2a, 2b) im Querschnitt als Profil (Z1-Z3; L1, L2) ausgebildet sind, wobei das Profil wenigstens einen ersten Schenkel (Z1; L1) und einen im Wesentlichen rechtwinklig zum ersten Schenkel (Z1; L1) angeordneten zweiten Schenkel (Z3; L2) umfasst, wobei wenigstens zwei der Querträger im Querschnitt ein U- oder V-förmiges Profil aufweisen, dessen offene Seite zur Unterseite (U) des Rostes (1) ausgerichtet ist, wobei jeder dieser Querträger an jedem Ende (E1, E2) wenigstens zwei Stanzungen (4a, 4b) aufweist, wobei in jeder Stanzung der erste Schenkel (Z1; L1) des Profils (Z1-Z3; L1, L2) angeordnet ist und über ein Verbindungsverfahren fest mit diesem verbunden ist, **dadurch gekennzeichnet, dass** der erste Schenkel (Z1; L1) des Profils (Z1-Z3; L1, L2) in jeder Stanzung eingesteckt oder eingepresst ist, wodurch eine vertikale Fixierung des Profils mit dem Querträger erreicht wird, und dass der erste Schenkel (Z1; L1) des Profils (Z1-Z3; L1, L2) wenigstens eine Verformung (V1; V2) aufweist, wobei die wenigstens eine Verformung (V1, V2) eine Prägung ist, wodurch eine horizontale Fixierung der Steck- oder Pressverbindung des Querträgers mit dem Profil erreicht wird.

2. Rost (1), insbesondere für die Verwendung als Fachboden für Plattenregale oder Schwerlastregale, mit zwei Längsseiten (2a, 2b) und zwischen den Längsseiten (2a, 2b) angeordneten Querträgern (3a, 3b, 3c, 3d, 3e, 3f, 3g, 3g, 3h, 3i, 3j), wobei die Längsseiten (2a, 2b) im Querschnitt als Profil (Z1-Z3; L1, L2) ausgebildet sind, wobei das Profil wenigstens einen ersten Schenkel (Z1; L1) und einen im Wesentlichen rechtwinklig zum ersten Schenkel (Z1; L1) angeordneten zweiten Schenkel (Z3; L2) umfasst, wobei wenigstens zwei der Querträger im Querschnitt ein L- förmiges Profil aufweisen, wobei wenigstens eine der offenen Seite zur Unterseite (U) des Rostes (1) ausgerichtet ist, wobei jeder dieser Querträger an jedem Ende (E1, E2) eine Stanzung (4c) aufweist, in welcher der erste Schenkel (Z1; L1) des Profils (Z1-Z3; L1, L2) angeordnet ist und über ein Verbindungsverfahren fest mit diesem verbunden ist, **dadurch gekennzeichnet, dass** der erste Schenkel (Z1; L1) des Profils (Z1-Z3; L1, L2) in der Stanzung eingesteckt oder eingepresst ist, wodurch eine vertikale Fixierung des Profils mit dem Querträger erreicht wird, und dass der erste Schenkel (Z1; L1) des Profils (Z1-Z3; L1, L2) wenigstens eine Verformung (V1; V2) aufweist, wobei die wenigstens eine Verformung (V1, V2) eine Prägung ist, wodurch eine horizontale Fixierung der Steck- oder Pressverbindung des Querträgers mit dem Profil erreicht wird.

3. Rost (1) gemäß Anspruch 1 oder Anspruch 2, **dadurch gekennzeichnet, dass** das Profil (Z1-Z3; L1, L2) als Z-Profil (Z1-Z3) oder als L-Profil (L1, L2) ausgebildet ist, wobei das Z-Profil einen zum ersten Schenkel (Z1) im Wesentlichen parallel angeordneten zweiten Schenkel (Z2) und ein den ersten und den zweiten Schenkel verbindendes Verbindungsteil (Z3) umfasst und das L-Profil einen ersten Schenkel (L1) und einen im Wesentlichen rechtwinklig zum ersten Schenkel (L1) angeordneten zweiten Schenkel (L2) umfasst.

4. Rost (1) gemäß Anspruch 1 oder Anspruch 2, **dadurch gekennzeichnet, dass** der erste Schenkel (Z1; L1) des Profils (Z1-Z3; L1, L2) wenigstens zwei Verformungen (V1, V2) aufweist, wobei die zwei Verformungen (V1, V2) beidseitig jeweils in der Nähe oder direkt neben der Steck- bzw. Pressverbindung angeordnet sind, so dass die Steck- bzw. Pressverbindung des Querträgers mit dem Profil beidseitig horizontal fixiert ist.

5. Rost (1) gemäß Anspruch 1 oder Anspruch 2, **dadurch gekennzeichnet, dass** der erste Schenkel (Z1; L1) des Profils (Z1-Z3; L1, L2) wenigstens eine weitere Verformung (V3) aufweist, welche vor dem Verbinden mit den Querträgern eingebracht ist und auf die der Querträger aufgesteckt oder aufgeschoben ist.

6. Rost (1) gemäß Anspruch 5, **dadurch gekennzeichnet, dass** die weitere Verformung (V3) eine Prägung ist.

7. Rost (1) gemäß einem der vorhergehenden Ansprüche, **dadurch gekennzeichnet, dass** der erste Schenkel (Z1; L1) des Profils (Z1-Z3; L1, L2) im an den zweiten Schenkel (Z2; L2) angrenzenden Bereich mindestens eine zum Querträger hin gerichtete Lasche (5a, 5b) aufweist.

8. Rost (1) gemäß Anspruch 7, **dadurch gekennzeichnet, dass** mindestens zwei zum Querträger hin gerichtete Laschen (5a, 5b) vorgesehen sind.

9. Rost (1) gemäß Anspruch 1 oder Anspruch 2, **dadurch gekennzeichnet, dass** alle Querträger (3a, 3b, 3c, 3d, 3e, 3f, 3g) im Querschnitt ein offenes Profil aufweisen, deren offene Seite zur Unterseite (U) des Rostes (1) ausgerichtet ist.

10. Rost (1) gemäß Anspruch 1 oder Anspruch 2, **dadurch gekennzeichnet, dass** der Rost (1) aus Stahl, vorzugsweise vorverzinktem Stahl, Edelstahl oder Aluminium besteht.

11. Rost (1) gemäß einem der vorhergehenden Ansprüche, **dadurch gekennzeichnet, dass** das Verhältnis der Traglast des Rostes (1) zu dem Eigengewicht des Rostes (1) im Bereich von 10 bis 200 liegt.

12. Rost (1) gemäß einem der vorhergehenden Ansprüche, **dadurch gekennzeichnet, dass** wenigstens 70 % der von dem Rost (1) abgedeckten Fläche als freie Projektionsfläche ausgestaltet ist.

13. Rost (1) gemäß Anspruch 1 oder Anspruch 2, **dadurch gekennzeichnet, dass** wenigstens eine Stanzung (4a; 4b; 4a, 4b) am jeweiligen Ende (E1; E2) des Querträgers eine Einlaufkontur mit wenigstens einer Schikane aufweist, wodurch ein zentriertes Einführen und ein kraft- und/oder formschlüssiges Verbinden des ersten Schenkels (Z1; L1) des Profils (Z1-Z3; L1, L2) mit dem Querträger ermöglicht wird.

14. Rost (1) gemäß Anspruch 13, **dadurch gekennzeichnet, dass** die wenigstens eine Stanzung (4a; 4b; 4a, 4b) am jeweiligen Ende (E1; E2) des Querträgers keilförmig ausgebildet ist.

## Claims

1. Grating (1), in particular for use as shelves for pallet racks or heavy-duty racks, having two longitudinal sides (2a, 2b) and cross members (3a, 3b, 3c, 3d, 3e, 3f, 3g, 3h, 3i, 3j) arranged between the longitudinal sides (2a, 2b), wherein the longitudinal sides (2a, 2b) have a cross section in the shape of a profile (Z1-Z3; L1, L2), wherein the profile comprises at least a first leg (Z1; L1) and a second leg (Z3; L2), which is substantially orthogonal to said first leg (Z1; L1), wherein at least two of the cross members have a cross section in the shape of a U or V profile, the open end of which is oriented towards the underside (U) of the grating (1), wherein each of these cross members has at least two punched recesses (4a, 4b) at each end (E1, E2), in each of which the first leg (Z1; L1) of the profile (Z1-Z3; L1: L2) is arranged and firmly connected to by means of a connection method, **characterized in that** the first leg (Z1; L1) of the profile (Z1-Z3; L1; L2) is inserted or pressed into each of the punched recesses, thereby vertical fixation of the profile with the cross member is achieved, and that the first leg (Z1; L1) of the profile (Z1-Z3; L1; L2) has at least one deformation (V1; V2), which is configured as an impression, thereby horizontal fixation of the plug-in or press-fit connection of the cross member with the profile is achieved.

2. Grating (1), in particular for use as shelves for pallet racks or heavy-duty racks, having two longitudinal sides (2a, 2b) and cross members (3a, 3b, 3c, 3d, 3e, 3f, 3g, 3h, 3i, 3j) arranged between the longitudinal sides (2a, 2b), wherein the longitudinal sides (2a, 2b) have a cross section in the shape of a profile (Z1-Z3; L1, L2), wherein the profile comprises at least a first leg (Z1; L1) and a second leg (Z3; L2), which is substantially orthogonal to said first leg (Z1; L1), wherein at least two of the cross members have a cross section in the shape of an L profile, at least one of the open sides being oriented towards the underside (U) of the grating (1), wherein each of these cross members has a punched recess (4c) at each end (E1, E2), in which the first leg (Z1; L1) of the profile (Z1-Z3; L1: L2) is arranged and firmly connected to by means of a connection method, **characterized in that** the first leg (Z1; L1) of the profile (Z1-Z3; L1; L2) is inserted or pressed into the punched recess, thereby vertical fixation of the profile with the cross member is achieved, and that the first leg (Z1; L1) of the profile (Z1-Z3; L1; L2) has at least one deformation (V1; V2), which is configured as an impression, thereby horizontal fixation of the plug-in- or press-fit connection of the cross member with the profile is achieved.

3. Grating (1) according to claim 1 or claim 2, **characterized in that** the profile (Z1-Z3; L1, L2) is configured as a Z profile (Z1-Z3) or as an L profile (L1; L2), the Z profile comprising a second leg (Z2), which is substantially parallel to the first leg (Z1), and a connecting part (Z3) that connects the first and second legs, and the L-profile comprising a first leg (L1) and a second leg (L2), which is substantially orthogonal to the first leg (L1).

4. Grating (1) according to claim 1 or claim 2, **characterized in that** the first leg (Z1; Z2) of the profile (Z1-Z3; L1, L2) has at least two deformations (V1, V2), the two deformations (V1, V2) being located one on each side of, either near or directly beside, the plug-in or press-fit connection so that the plug-in or press-fit connection between the cross member and the profile is fixed horizontally on both sides.

5. Grating (1) according to claim 1 or claim 2, **characterized in that** the first leg (Z1; L1) of the profile (Z1-Z3; L1, L2) has at least one additional deformation (V3), which is created prior to connection with the cross members and over which the cross member is inserted or pushed in.

6. Grating (1) according to claim 5, **characterized in that** the additional deformation (V3) is an impression.

7. Grating (1) according to any one of the preceding claims, **characterized in that** the first leg (Z1; L1) of the profile (Z1-Z3; L1, L2) has at least one tongue (5a, 5b), which is oriented towards the cross member, in the area bordering on the second leg (Z2; L2).

8. Grating (1) according to claim 7, **characterized in that** at least two tongues (5a, 5b) are provided, which are oriented towards the cross member.

9. Grating (1) according to claim 1 or claim 2, **characterized in that** all the cross members (3a, 3b, 3c, 3d, 3e, 3f, 3g) have a cross section in the shape of an open profile, the open side of which is oriented towards the underside (U) of the grating (1).

10. Grating (1) according to claim 1 or claim 2, **characterized in that** the grating (1) consists of steel, preferably pre-galvanized steel, stainless steel or aluminium.

11. Grating (1) according to any one of the preceding claims, **characterized in that** the ratio of the load-carrying capacity of the grating (1) to the dead weight of the grating (1) is in the range from 10 to 200.

12. Grating (1) according to any one of the preceding claims, **characterized in that** at least 70 % of the surface area covered by the grating (1) is configured as free projection area.

13. Grating (1) according to claim 1 or claim 2, **characterized in that** at least one punched recess (4a; 4b; 4a, 4b) at each end (E1; E2) of the cross member has an entry contour with at least one chicane, thereby enabling centered insertion and force- or form-fitting connection of the first leg (Z1; L1) of the profile (Z1-Z3; L1, L2) with the cross member.

14. Grating (1) according to claim 13, **characterized in that** the at least one punched recess (4a; 4b; 4a, 4b) at each end (E1; E2) of the cross member is configured in the form of a wedge.

## Revendications

1. Caillebotis (1), en particulier pour l'utilisation comme tablette pour des rayonnages à panneaux ou des rayonnages pour charges lourdes, comprenant deux côtés longitudinaux (2a, 2b) et des traverses (3a, 3b, 3c, 3d, 3e, 3f, 3g, 3h, 3i, 3j) disposées entre les côtés longitudinaux (2a, 2b), les côtés longitudinaux (2a, 2b) étant formés en section transversale comme un profilé (Z1-Z3 ; L1, L2), le profilé ayant au moins une première branche (Z1 ; L1) et une deuxième branche (Z3 ; L2) disposée sensiblement perpendiculairement à la première branche (Z1 ; L1), au moins deux des traverses ayant en section transversale un profil en U ou en V dont le côté ouvert est dirigé vers la face inférieure (U) du caillebotis (1), chacune de ces traverses ayant au moins deux découpes (4a, 4b) à chaque extrémité (E1, E2), la première branche (Z1 ; L1) du profilé (Z1-Z3 ; L1, L2) étant disposée dans chaque découpe et étant solidement reliée à celle-ci par un procédé d'assemblage, **caractérisé en ce que** la première branche (Z1 ; L1) du profilé (Z1-Z3 ; L1, L2) est insérée ou pressée dans chaque découpe, ce qui permet de fixer verticalement le profilé à la traverse, et **en ce que** la première branche (Z1 ; L1) du profilé (Z1-Z3 ; L1, L2) est munie d'au moins une déformation (V1 ; V2), laquelle au moins une déformation (V1, V2) étant un estampage, ce qui permet de fixer horizontalement l'assemblage par insertion ou par pression de la traverse sur le profilé.

2. Caillebotis (1), en particulier pour l'utilisation comme tablette pour des rayonnages à panneaux ou des rayonnages pour charges lourdes, comprenant deux côtés longitudinaux (2a, 2b) et des traverses (3a, 3b, 3c, 3d, 3e, 3f, 3g, ***3g***, 3h, 3i, 3j) disposées entre les côtés longitudinaux (2a, 2b), les côtés longitudinaux (2a, 2b) étant formés en section transversale comme un profilé (Z1-Z3 ; L1, L2), le profilé ayant au moins une première branche (Z1 ; L1) et une deuxième branche (Z3 ; L2) disposée sensiblement perpendiculairement à la première branche (Z1 ; L1), au moins deux des traverses ayant en section transversale un profil en L, au moins un des côtés ouverts étant dirigé vers la face inférieure (U) du caillebotis (1), chacune de ces traverses ayant à chaque extrémité (E1, E2) une découpe (4c) dans laquelle est disposée la première branche (Z1 ; L1) du profilé (Z1-Z3 ; L1, L2) et solidement relié à celle-ci par un procédé d'assemblage, **caractérisé en ce que** la première branche (Z1 ; L1) du profilé (Z1-Z3 ; L1, L2) est insérée ou pressée dans la découpe, ce qui permet de fixer verticalement le profilé à la traverse, et **en ce que** la première branche (Z1 ; L1) du profilé (Z1-Z3 ; L1, L2) est munie d'au moins une déformation (V1 ; V2), laquelle au moins une déformation (V1, V2) est un estampage, ce qui permet de fixer horizontalement l'assemblage par insertion ou par pression de la traverse sur le profilé.

3. Caillebotis (1) selon la revendication 1 ou la revendication 2, **caractérisé en ce que** le profilé (Z1-Z3 ; L1, L2) est formé comme un profilé en Z (Z1-Z3) ou comme un profilé en L (L1, L2), le profilé en Z comprenant une deuxième branche (Z2) disposée sensiblement parallèlement à la première branche (Z1) et une pièce de liaison (Z3) reliant la première et la deuxième branche, et le profilé en L comprend une première branche (L1) et une deuxième branche (L2) disposée sensiblement perpendiculairement à la première branche (L1).

4. Caillebotis (1) selon la revendication 1 ou la revendication 2, **caractérisé en ce que** la première branche (Z1 ; L1) du profilé (Z1-Z3 ; L1, L2) présente au moins deux déformations (V1, V2), les deux déformations (V1, V2) étant disposées des deux côtés, à proximité ou directement à côté, de l'assemblage par insertion ou par pression, de sorte que l'assemblage par insertion ou par pression de la traverse sur le profilé est fixé horizontalement des deux côtés.

5. Caillebotis (1) selon la revendication 1 ou la revendication 2, **caractérisé en ce que** la première branche (Z1 ; L1) du profilé (Z1-Z3 ; L1, L2) est munie d'au moins une autre déformation (V3) qui est réalisée avant l'assemblage sur les traverses et sur laquelle la traverse est enfichée ou poussée.

6. Caillebotis (1) selon la revendication 5, **caractérisé en ce que** l'autre déformation (V3) est un estampage.

7. Caillebotis (1) selon l'une des revendications précédentes, **caractérisé en ce que** dans la zone adjacente à la deuxième branche (Z2 ; L2), la première branche (Z1 ; L1) du profilé (Z1-Z3 ; L1, L2) est munie d'au moins une languette (5a, 5b) tournée vers la traverse.

8. Caillebotis (1) selon la revendication 7, **caractérisé en ce qu'il** est prévu au moins deux languettes (5a, 5b) tournées vers la traverse.

9. Caillebotis (1) selon la revendication 1 ou la revendication 2, **caractérisé en ce que** toutes les traverses (3a, 3b, 3c, 3d, 3e, 3f, 3g) présentent en section transversale un profil ouvert dont le côté ouvert est dirigé vers la face inférieure (U) du caillebotis (1).

10. Caillebotis (1) selon la revendication 1 ou la revendication 2, **caractérisé en ce que** le caillebotis (1) est en acier, de préférence en acier pré-galvanisé, en acier inoxydable ou en aluminium.

11. Caillebotis (1) selon l'une des revendications précédentes, **caractérisé en ce que** le rapport de la charge portée du caillebotis (1) au poids propre du caillebotis (1) est compris entre 10 et 200.

12. Caillebotis (1) selon l'une des revendications précédentes, **caractérisé en ce qu'**au moins 70 % de la surface couverte par le caillebotis (1) est conçue comme une surface de projection libre.

13. Caillebotis (1) selon la revendication 1 ou la revendication 2, **caractérisé en ce qu'**au moins une découpe (4a ; 4b ; 4a, 4b) à chaque extrémité (E1 ; E2) de la traverse présente un contour de guidage avec au moins une chicane, ce qui permet une insertion centrée et un assemblage par friction et/ou par emboîtement de forme de la première branche (Z1 ; L1) du profilé (Z1-Z3 ; L1, L2) sur la traverse.

14. Caillebotis (1) selon la revendication 13, **caractérisé en ce que** l'au moins une découpe (4a ; 4b ; 4a, 4b) à chaque extrémité (E1 ; E2) de la traverse est en forme de coin.
